# EUROPEAN PATENT APPLICATION

(11) **EP 4 503 541 A1**
(43) Date of publication of application: **05.02.2025**
(21) Application number: 22933562.5
(22) Date of filing: 25.03.2022
(51) Int. Cl.: H04L 41/0897

(54) **NETWORK NODE AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); YAMAUCHI, Kenta, Tokyo 100-6150 (JP); SAWADA, Masahiro, Tokyo 100-6150 (JP)
(74) Representative: Hoffmann Eitle
(86) International application number: PCT/JP2022/014746
(87) International publication number: WO 2023/181425

(57) **Abstract**

A network node includes: a reception unit configured to receive information indicating properties of a computing resource that is configured to a subscriber and a location of a terminal of the subscriber; and a control unit configured to control the computing resource to move to another network node, based on the information indicating the properties of the computing resource and the location of the terminal of the subscriber.

## Description

### FIELD OF THE INVENTION

The present invention relates to a network node and a communication method in a wireless communication system.

### BACKGROUND OF THE INVENTION

In NR (New Radio) (also referred to as "5G") that is a successor system of LTE (Long Term Evolution), a network architecture has been discussed which includes: 5GC (5G Core Network) corresponding to EPC (Evolved Packet Core) that is a core network in an LTE (Long Term Evolution) network architecture; and NG-RAN (Next Generation - Radio Access Network) corresponding to E-UTRAN (Evolved Universal Terrestrial Radio Access Network) that is a RAN (Radio Access Network) in the LTE network architecture (for example, non-patent document 1 and non-patent document 2).

### Citation List

### Non-Patent Document

Non-Patent Document 1: 3GPP TS 23.501 V17.2.0 (2021-09)
Non-Patent Document 2: 3GPP TS 23.502 V17.2.1 (2021-09)

### SUMMARY OF THE INVENTION

### TECHNICAL PROBLEM

The communication carriers are assumed to provide services of providing the computing resource in a network to a subscriber. The subscriber can use the computing resource as a termination point of call-origination or call-reception related to communications of the subscriber. The subscriber may allocate an application program that consumes computing capabilities to the computing resource, connect a terminal to the computing resource, and use the terminal as an output terminal. In order to achieve the low latency, it is preferable that the computing resource is located near the subscriber. In addition, it is preferable that the computing resource is moved in accordance with the move of the subscriber. However, in the conventional technique, it has been difficult to move the computing resource.

The present invention has been made in view of the above points, and it is an object of the present invention to move the computing resource in the network in accordance with the move of the subscriber.

### SOLUTION TO PROBLEM

According to the disclosed technique, a network node is provided. The network node includes: a reception unit configured to receive information indicating properties of a computing resource that is configured to a subscriber and a location of a terminal of the subscriber; and a control unit configured to control the computing resource to move to another network node, based on the information indicating the properties of the computing resource and the location of the terminal of the subscriber.

### ADVANTAGEOUS EFFECTS OF INVENTION

According to the disclosed technique, a technique is provided that enables the computing resource in the network to move in accordance with the move of the subscriber.

### BRIEF DESCRIPTION OF THE DRAWINGS

[Fig. 1] is a drawing for describing a wireless communication system related to an embodiment of the present invention.
[Fig. 2] is a drawing illustrating an example of a structure of a core network related to an embodiment of the present invention.
[Fig. 3] is a sequence diagram illustrating an example of a flow of a CRMF session establishment procedure related to an embodiment of the present invention.
[Fig. 4] is a sequence diagram illustrating an example of a flow of a CRMF session modification procedure related to an embodiment of the present invention.
[Fig. 5] is a sequence diagram illustrating an example of a flow of a service request procedure related to an embodiment of the present invention.
[Fig. 6] is a sequence diagram illustrating an example of a flow of a CRMF session release procedure related to an embodiment of the present invention.
[Fig. 7] is a sequence diagram illustrating an example of a flow of a CRMF registration procedure related to an embodiment of the present invention.
[Fig. 8] is a sequence diagram illustrating an example of a flow of a PDU session establishment procedure related to an embodiment of the present invention.
[Fig. 9] is a sequence diagram illustrating an example of a flow of an arrived packet transfer determination procedure related to an embodiment of the present invention.
[Fig. 10] is a sequence diagram illustrating an example of a flow of an arrived packet transfer procedure related to an embodiment of the present invention.
[Fig. 11] is a sequence diagram illustrating an example of a flow of a container registration procedure related to an embodiment of the present invention.
[Fig. 12] is a sequence diagram illustrating an example of a flow of an inter-container communication procedure related to an embodiment of the present invention.
[Fig. 13] is a sequence diagram illustrating an example of a flow of a container move procedure related to the container move mode 2 of an embodiment of the present invention.
[Fig. 14] is a sequence diagram illustrating an example of a flow of a container move procedure related to the container move mode 3 of an embodiment of the present invention.
[Fig. 15] is a drawing illustrating an example of a functional structure of a base station related to an embodiment of the present invention.
[Fig. 16] is a drawing illustrating an example of a functional structure of a terminal related to an embodiment of the present invention.
[Fig. 17] is a drawing illustrating an example of a hardware structure of the base station or the terminal related to an embodiment of the present invention.
[Fig. 18] is a drawing illustrating an example of a structure of a vehicle related to an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used accordingly. The conventional techniques include, but are not limited to, conventional NR or LTE, for example. Further, it is assumed that the term "LTE" used in the present specification has, unless otherwise specifically mentioned, a broad meaning including a scheme of LTE - Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, a radio parameter is "configured" may mean that a predetermined value is pre-configured, or may mean that a radio parameter indicated by the base station or the terminal is configured.

### (System configuration)

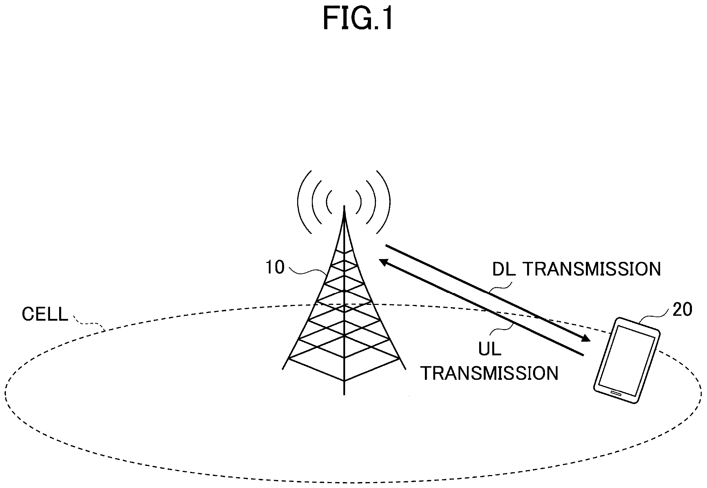

Fig. 1 is a drawing illustrating a wireless communication system related to an embodiment of the present invention.

As illustrated in Fig. 1, the wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communication with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of subcarriers or resource blocks. Further, a TTI (Transmission Time Interval) in the time domain may be a slot, or the TTI may be a subframe.

The base station 10 transmits a synchronization signal and system information to the terminal 20. The synchronization signal is, for example, an NR-PSS and an NR-SSS. The system information is transmitted via, for example, a NR-PBCH, and may be referred to as broadcast information. The synchronization signal and the system information may be referred to as an SSB (SS/PBCH block). As shown in Fig. 1, the base station 10 transmits a control signal or data in DL (Downlink) to the terminal 20 and receives a control signal or data in UL (Uplink) from the terminal 20. The base station 10 and terminal 20 are capable of transmitting and receiving a signal by performing the beamforming. Further, the base station 10 and the terminal 20 can both apply MIMO (Multiple Input Multiple Output) communication to DL or UL. Further, the base station 10 and the terminal 20 may both perform communications via a secondary cell (SCell: Secondary Cell) and a primary cell (PCell: Primary Cell) using CA (Carrier Aggregation). In addition, the terminal 20 may perform communications via a primary cell of the base station 10 and a primary secondary cell group cell (PSCell: Primary SCG Cell) of another base station 10 using DC (Dual Connectivity).

The terminal 20 may be a communication apparatus that includes a wireless communication function such as a smartphone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. In addition, the terminal 20 receives various reference signals transmitted from the base station 10 and performs measurement of the propagation path quality based on the reception result of the reference signals. Note that the terminal 20 may be referred to as a UE, and the base station 10 may be referred to as a gNB.

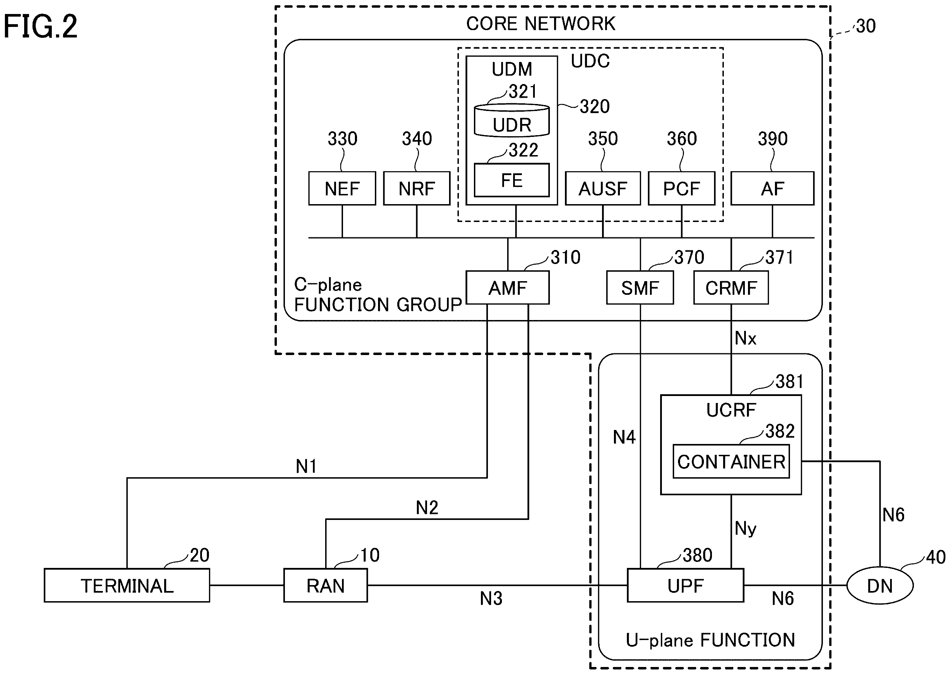

Fig. 2 is a drawing illustrating an example of a structure of a core network related to an embodiment of the present invention. The wireless communication system includes a RAN (Radio Access Network) 10, a terminal 20, a core network 30, and a DN (Data Network) 40.

The core network 30 is a network including an exchange, a subscriber information management device, and the like. The core network 30 includes a network node that supports a U-Plane function, and a network node group that supports a C-Plane function group.

The U-Plane function is a function of performing processing of transmission and reception of user data. The network node that provides the U-Plane function is a UPF (User plane function) 380, for example. The UPF 380 is a network node that has functions of: an external PDU (Protocol Data Unit) session point for the interconnection with the DN 40; packet routing and forwarding; user plane QoS (Quality of Service) handling; and the like. The UPF 380 controls transmission and reception of data between the DN 40 and the terminal 20. The UPF 380 and the DN 40 may include one or more network slices.

The C-Plane function group is a function group the performs a series of control processes for communication establishment, etc. The network node group that supports the C-Plane function group includes an AMF (Access and Mobility Management Function) 310, a UDM (Unified Data Management) 320, an NEF (Network Exposure Function) 330, an NRF (Network Repository Function) 340, an AUSF (Authentication Server Function) 350, a PCF (Policy Control Function) 360, an SMF (Session Management Function) 370, and an AF (Application Function) 390, for example.

The RAN 10 is a network node that is capable of communication, that is connected between the core network 30 and the terminal 20, and that includes a base station, a line control device, and the like. The RAN 10 is connected to, and capable of communicating with, the AMF 310 and the UPF 380. It is to be noted that, hereinafter, the base station 10 may be referred to as a RAN 10.

The AMF 310 is a network node having functions of terminating the RAN interface, terminating the NAS (Non-Access Stratum), managing registration, managing connection, managing reachability, managing mobility, and the like. The NRF 340 is a network node having a function of discovering NF (Network Function) instances that provide services. The UDM 320 is a network node that manages subscriber data and authentication data. The UDM 320 includes a UDR (User Data Repository) 321 that stores the above-described data and an FE (Front End) 322. The FE 322 processes subscriber information.

The SMF 370 is a network node having functions such as session management, IP (Internet Protocol) address assignment and management for terminals 20, a DHCP (Dynamic Host Configuration Protocol) function, an ARP (Address Resolution Protocol) proxy, a roaming function, and the like. The NEF 330 is a network node having a function of indicating capabilities and events to other NFs (Network Functions). The PCF 360 is a network node having a function of performing policy control of the network.

The AF (Application Function) 390 is a network node having a function of controlling the application server.

The terminal 20 is connected to, and capable of communicating with, the AMF 310 via the N1 link. The AMF 310 is connected to, and capable of communicating with, the RAN 10 via the N2 link. The UPF 380 is connected to, and capable of communicating with, the RAN 10 via the N3 link. The UPF 380 is connected to, and capable of communicating with, the SMF 370 via the N4 link. The UPF 380 is connected to, and capable of communicating with, the DN 40 via the N6 link.

Furthermore, the core network 30 related to an embodiment of the present invention further includes the CRMF (Computing Resource Management Function) 371 and the UCRF (User Computing Resource Function) 381 in addition to the above-described conventional configuration.

The UCRF 381 is a function of providing the computing resource that can be used by a user (subscriber) (hereinafter, also referred to as a user computing resource function). Hereinafter, the computing resource is also referred to as a container. It is to be noted that the computing resource may include the execution environment for executing various applications that are installed in the computing resource. In other words, the UCRF 381 includes one or a plurality of containers 382. The UCRF 381 is included in the U-Plane function. The UCRF 381 is connected to, and capable of communicating with, the UPF 380 via the Ny link. In addition, the UCRF 381 is connected to, and capable of communicating with, the DN 40 via the N6 link.

The CRMF 371 is a function of managing the computing resource (hereinafter, also referred to as a computing resource management function). The CRMF 371 is included in the C-Plane function group. The CRMF 371 is connected to, and capable of communicating with, other network nodes included in the C-Plane function group.

The CRMF 371 is connected to, and capable of communicating with, the UCRF 381 via the Nx link. It is to be noted that the names of the Nx link and the Ny link are examples and may be referred to other names.

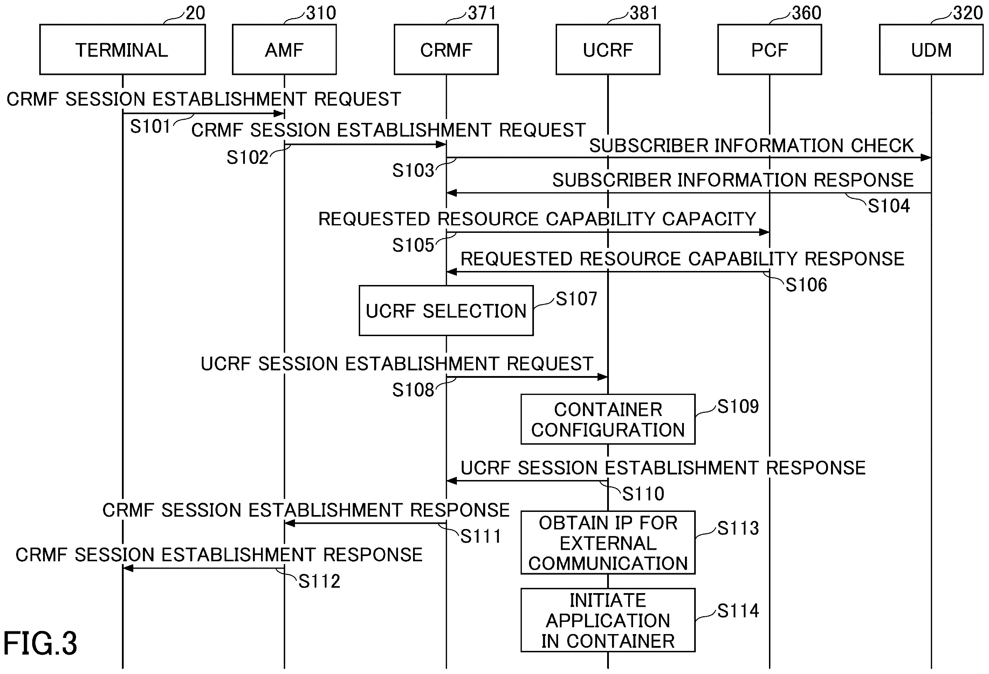

Fig. 3 is a sequence diagram illustrating an example of a flow of a CRMF session establishment procedure related to an embodiment of the present invention. In step S101, the terminal 20 transmits a CRMF session establishment request to the AMF 310. The terminal 20 may configure the CRMF session ID related to the termination at the AMF and the requested resource capability capacity indicating the requested computing resource capacity in the CRMF session establishment request. It is to be noted that the "computing resource capacity" described below may include the execution environment, capability, or the like, in addition to the computing resource capacity.

In subsequent step S102, the AMF 310 transmits the CRMF session establishment request to the CRMF 371. The AMF 310 includes the CRMF session ID configured by the terminal 20 in the CRMF session establishment request. The AMF 310 may include the requested resource capability capacity configured by the terminal 20 in the CRMF session establishment request.

In subsequent step S103, the CRMF 371 transmits a subscriber information check to the UDM 320 in order to obtain the subscriber information. In subsequent step S104, the UDM 320 transmits a subscriber information response to the CRMF 371. The CRMF 371 determines whether the CRMF session establishment request from the terminal 20 is allowed, based on the obtained subscriber information. In a case where the CRMF session establishment request from the terminal 20 is allowed by the determination, the flow may proceed to step S105. On the other hand, in a case where the CRMF session establishment request from the terminal 20 is not allowed by the determination, the CRMF 371 may transmit a response indicating that the CRMF session establishment request is rejected to the AMF 310. The AMF 310 may transmit the response to the terminal 20.

In subsequent step S105, the CRMF 371 transmits the requested resource capability capacity that is obtained according to the CRMF session establishment request to the PCF 360. In subsequent step S106, the PCF 360 determines the computing resource capacity to be provided to the terminal 20 based on the information included in the obtained requested resource capability capacity and the policy of the communication carrier, and transmits information including the determined capacity to the CRMF 371 as a requested resource capability response.

For example, the PCF 360 may determine to provide the computing resource with the same capacity as the requested resource capability capacity to the terminal 20, may determine to provide the computing resource with a capacity that is less than the requested resource capability capacity to the terminal 20, or may determine to provide the computing resource with a capacity that is greater than the requested resource capability capacity to the terminal 20.

In subsequent step S107, the CRMF 371 selects the UCRF 381. For example, the CRMF 371 may select the UCRF 381 that is close to the terminal 20, based on the location information of the terminal 20. In subsequent step S108, the CRMF 371 transmits a UCRF session establishment request to the UCRF 381. The CRMF 371 configures a computing resource generation request in the UCRF session establishment request. The computing resource generation request may be configured based on the requested resource capability capacity and may include information indicating the computing resource capacity based on the requested resource capability response that is obtained from the PCF 360.

In subsequent step S109, the UCRF 381 configures a container. The container may be configured based on the computing resource capacity that is obtained from the CRMF 371. In subsequent step S110, the UCRF 381 transmits a UCRF session establishment response to the CRMF 371.

In subsequent step S111, the CRMF 371 transmits a CRMF session establishment response to the AMF 310. In subsequent step S 112, the AMF 310 transmits the CRMF session establishment response to the terminal 20.

In addition, in step S113, the UCRF 381 may obtain an IP address for the external communication by using an interface to the DN. In addition, in step S114, the UCRF 381 may initiate an application in the container. The application may be a communication application that uses the obtained IP address for the external communication.

It is to be noted that, after step S114, the terminal 20 may receive services of the communication carrier by using the container that is configured in the UCRF 381.

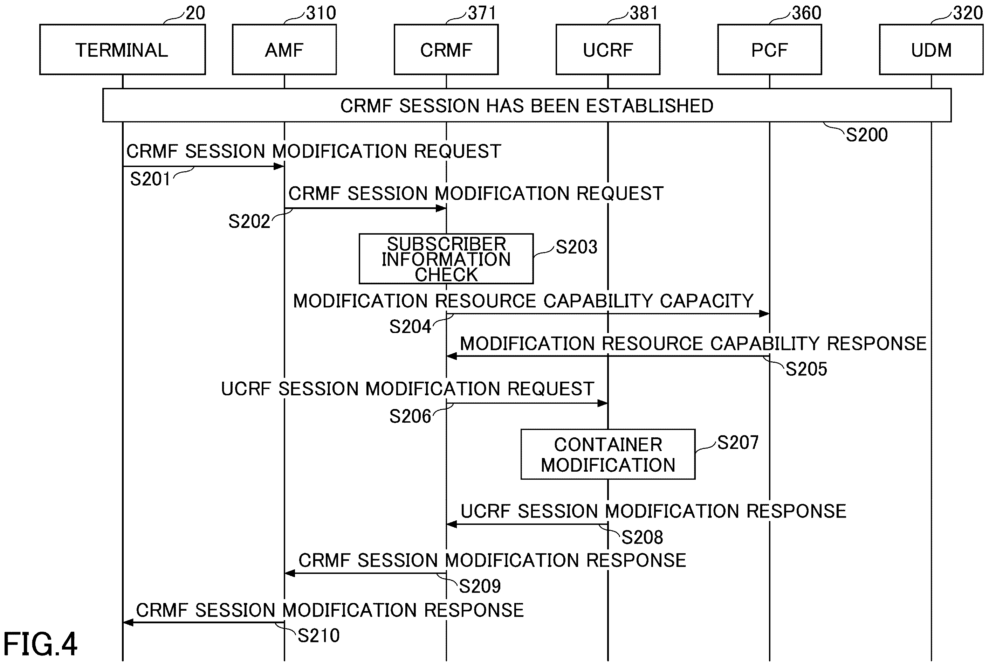

Fig. 4 is a sequence diagram illustrating an example of a flow of a CRMF session modification procedure related to an embodiment of the present invention. In step S200, the CRMF session has already been established.

In step S201, the terminal 20 transmits a CRMF session modification request to the AMF 310 by specifying the CRMF session ID. The terminal 20 may configure, in the CRMF session modification request, the modification resource capability capacity that is information requesting the computing resource capacity of the container to be modified, the capability, and the modification of the execution environment, etc.

In subsequent step S202, the AMF 310 transmits the CRMF session modification request to the CRMF 371. The AMF 310 includes the CRMF session ID configured by the terminal 20 in the CRMF session modification request. The AMF 310 may include the modification resource capability capacity configured by the terminal 20 in the CRMF session modification request.

In subsequent step S203, the CRMF 371 determines whether the CRMF session modification request from the terminal 20 is allowed, based on the subscriber information that has already been obtained by the node itself. In a case where the CRMF session modification request from the terminal 20 is allowed by the determination, the flow may proceed to step S204.

In subsequent step S204, the CRMF 371 transmits the modification resource capability capacity that is obtained according to the CRMF session modification request to the PCF 360. In subsequent step S205, the PCF 360 determines the computing resource capacity to be provided to the terminal 20 based on the information included in the obtained modification resource capability capacity and the policy of the communication carrier, and transmits information including the determined capacity to the CRMF 371 as a modification resource capability response.

For example, the PCF 360 may determine to provide the computing resource with the same capacity as the modification resource capability capacity to the terminal 20, may determine to provide the computing resource with a capacity that is less than the modification resource capability capacity to the terminal 20, or may determine to provide the computing resource with a capacity that is greater than the modification resource capability capacity to the terminal 20.

In subsequent step S206, the CRMF 371 transmits a UCRF session modification request to the UCRF 381. The CRMF 371 configures a computing resource modification request in the UCRF session modification request. The computing resource modification request may be configured based on the modification resource capability capacity and may include information indicating the computing resource capacity based on the modification resource capability response that is obtained from the PCF 360.

In subsequent step S207, the UCRF 381 modifies the container based on the UCRF session modification request. The container may be modified based on the computing resource capacity that is obtained from the CRMF 371. In subsequent step S208, the UCRF 381 transmits a UCRF session modification response to the CRMF 371.

In subsequent step S209, the CRMF 371 transmits a CRMF session modification response to the AMF 310. In subsequent step S210, the AMF 310 transmits the CRMF session modification response to the terminal 20.

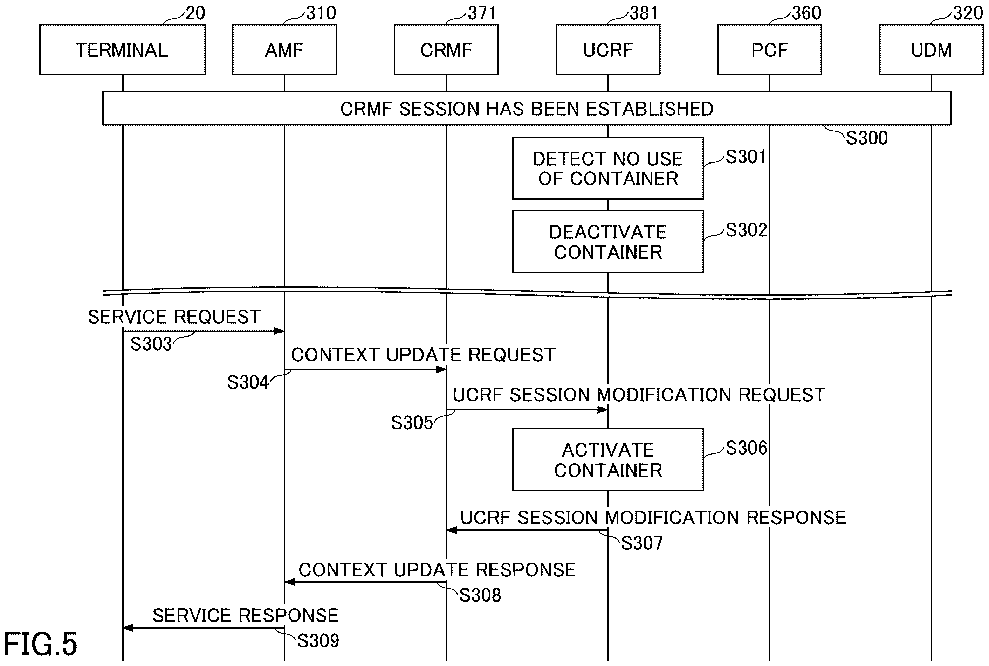

Fig. 5 is a sequence diagram illustrating an example of a flow of a service request procedure related to an embodiment of the present invention. In step S300, the CRMF session has already been established.

In step S301, the UCRF 381 detects the non-use of container. In subsequent step S302, the UCRF 381 deactivates the container. In a case where a container is not used for a predetermined period, the UCRF 381 may deactivate the container based on the policy of the communication carrier.

In step S303, the terminal 20 transmits a service request to the AMF 310 by specifying the CRMF session ID in the activation required container list. In subsequent step S304, the AMF 310 transmits a context update request including an information element (IE) indicating a container state configured as "being activated" to the CRMF 371. It is to be noted that "being activated", "activated", or "deactivated" may be configurable as the value of the information element indicating the container state.

In subsequent step S305, the CRMF 371 transmits a UCRF session modification request to the UCRF 381. The CRMF 371 configures a computing resource modification request in the UCRF session modification request. The CRMF 371 may configure the information element indicating the container state obtained from the context update request in the computing resource modification request.

In subsequent step S306, the UCRF 381 activates the container based on the UCRF session modification request. In subsequent step S307, the UCRF 381 transmits a UCRF session modification response to the CRMF 371.

In subsequent step S308, the CRMF 371 transmits a context update response to the AMF 310. In subsequent step S309, the AMF 310 transmits a service response to the terminal 20.

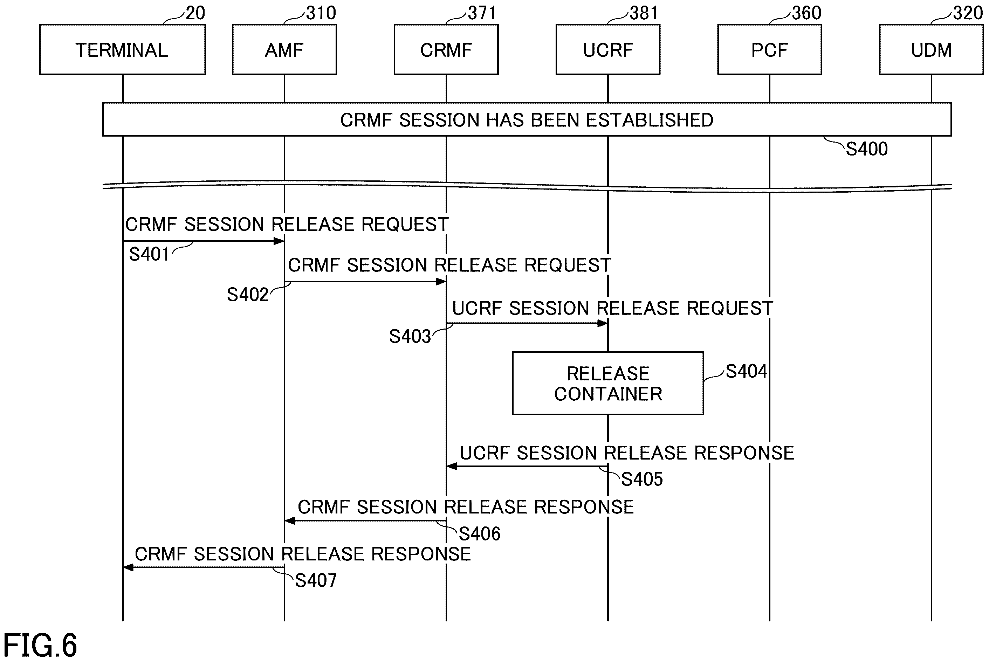

Fig. 6 is a sequence diagram illustrating an example of a flow of a CRMF session release procedure related to an embodiment of the present invention. In step S400, the CRMF session has already been established.

In step S401, the terminal 20 transmits a CRMF session release request to the AMF 310 by specifying the CRMF session ID. In subsequent step S402, the AMF 310 transmits a CRMF session release request to the CRMF 371. The AMF 310 includes the CRMF session ID configured by the terminal 20 in the CRMF session release request.

In subsequent step S403, the CRMF 371 transmits a UCRF session release request for releasing the UCRF session corresponding to the CRMF session specified by the received CRMF session release request to the UCRF 381. In subsequent step S404, the UCRF 381 releases the corresponding container based on the received UCRF session release request. In subsequent step S405, the UCRF 381 transmits a UCRF session release response to the CRMF 371.

In subsequent step S406, the CRMF 371 transmits a CRMF session release response to the AMF 310. In subsequent step S407, the AMF 310 transmits the CRMF session release response to the terminal 20.

### (Transfer of arrival packet to container)

Next, a procedure of transferring the call arrival to the terminal 20 to the container 382 will be described.

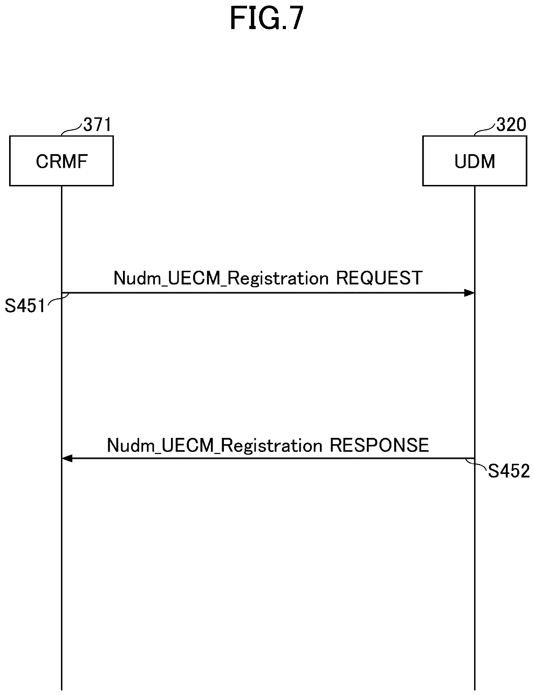

Fig. 7 is a sequence diagram illustrating an example of a flow of a CRMF registration procedure related to an embodiment of the present invention. The CRMF registration procedure is a procedure of registering the CRMF 371 to the UDM 320. The "Ncrmf_CRMFSession" service of controlling the CRMF session context included in the CRMF 371 is introduced to the C-Plane function group as a premise of the following description.

The CRMF 371 transmits a "Nudm_UECM_Registration" request to the UDM 320 after the container 382 is generated (step S451). The "Nudm_UECM_Registration" request may include an NF instance ID of the CRMF 371, a CRMF session ID that is allocated by the terminal 20 at the time of container generation request, an SUPI (Subscription Permanent Identifier) of the terminal, and the like. The "Nudm_UECM_Registration" request is an example of a registration request of the CRMF 371 to the UDM 320.

The UDM 320 transmits a "Nudm_UECM_Registration" response to the CRFM 371 (step S452).

According to the above-described operation, the SMF 370 can access the UDM 320 and can find the CRMF 371 that controls the transfer-destination container and the transfer-destination UCRF 381.

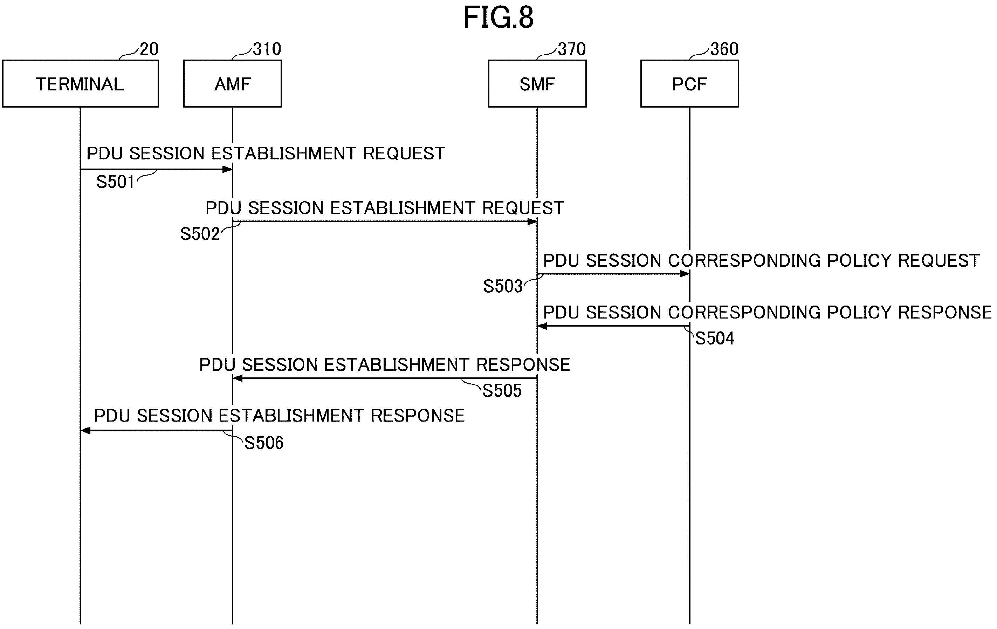

Fig. 8 is a sequence diagram illustrating an example of a flow of a PDU session establishment procedure related to an embodiment of the present invention. The PDU session establishment procedure is a procedure for establishing a PDU session, and the procedure flow is a flow similar to the conventional flow. Hereinafter, the difference from the conventional flow will be mainly described.

The terminal 20 transmits a PDU session establishment request to the AMF 310 (step S501). Here, the PDU session establishment request may include an information element for requesting "no-response container transfer" in addition to the conventional information elements. The "no-response container transfer" means transferring to the container without responding.

The AMF 310 transmits the PDU session establishment request to the SMF 370 (step S502). The SMF 370 transmits a PDU session corresponding policy request to the PCF 360 (step S503). The PCF 360 transmits a PDU session corresponding policy response to the SMF 370 (step S504).

The SMF 370 transmits a PDU session establishment response to the AMF 310 (step S505). The AMF 310 indicates the PDU session establishment response to the terminal 20 (step S506).

Here, the PDU session corresponding policy may include an information element for requesting "no-response container transfer" in addition to the conventional information elements. It is to be noted that the subscriber can configure or modify the PDU session corresponding policy stored by the PCF 360 by using the NEF 330. In a case where the SMF 370 receives a "no-response container transfer" request from the terminal 20 or the PCF 360, the SMF 370 may store an information element for requesting the "no-response container transfer" as a context of the PDU session.

The established PDU session will be in a maintained state (that is, preservation state). Hereinafter, a transfer procedure in a case where a packet arrives at the PDU session will be described.

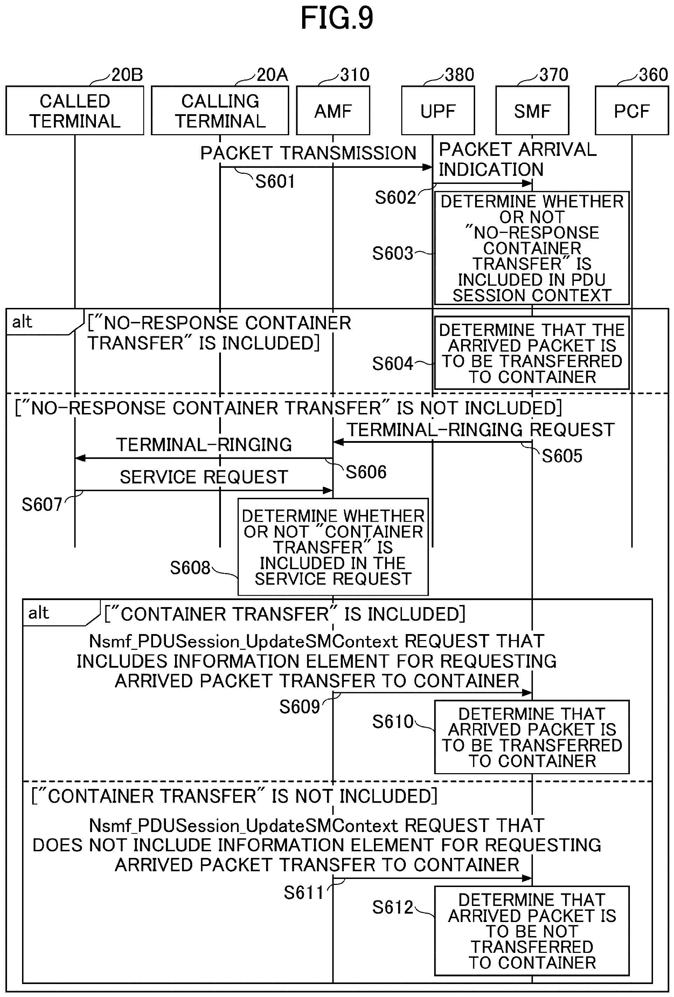

Fig. 9 is a sequence diagram illustrating an example of a flow of an arrived packet transfer determination procedure related to an embodiment of the present invention. The arrived packet transfer determination procedure is a procedure of determining whether an arrived packet is to be transferred to the container 382.

The UPF 380 receives a packet from a calling terminal 20A (step S601). It is to be noted that the calling terminal 20A is an example of a call-arrival source. The call-arrival source may be an external terminal or an external application (a network node, or the like, that performs a process that is defined in the application program). The UPF 380 buffers (stores) the packet. It is to be noted that the UPF 380 is an example of the first network node that stores a packet that is to be transferred to the computing resource configured for each subscriber. Next, the UPF 380 indicates the packet arrival to the SMF 370 (step S602).

The SMF 370 determines whether or not "no-response container transfer" is included in the PDU session context (step S603). The SMF 370 determines that the arrived packet is to be transferred to the container in a case where the SMF 370 determines that "no-response container transfer" is included in the PDU session context (step S604).

In addition, the SMF 370 transmits a terminal-ringing request to the AMF 310 in a case where the SMF 370 determines that "no-response container transfer" is not included in the PDU session context (step S605). The AMF 310 transmits a terminal-ringing to a called terminal 20B (step S606). The called terminal 20B transmits a service request to the AMF 310 (step S607).

The AMF 310 determines whether or not "container transfer" is included in the service request (step S608). The AMF 310 transmits a "Nsmf_PDUSession_UpdateSMContext" request including an information element for requesting that the arrived packet is to be transferred to the container to the SMF 370 in a case where the AMF 310 determines that "container transfer" is included in the service request (step S609). Accordingly, the SMF 370 determines that the arrived packet is to be transferred to the container 382 (step S610).

In addition, the AMF 310 transmits a "Nsmf_PDUSession_UpdateSMContext" request that does not include an information element for requesting that the arrived packet is to be transferred to the container to the SMF 370 in a case where the AMF 310 determines that "container transfer" is not included in the service request (step S611). Accordingly, the SMF 370 determines that the arrived packet is to be not transferred to the container 382 (step S612).

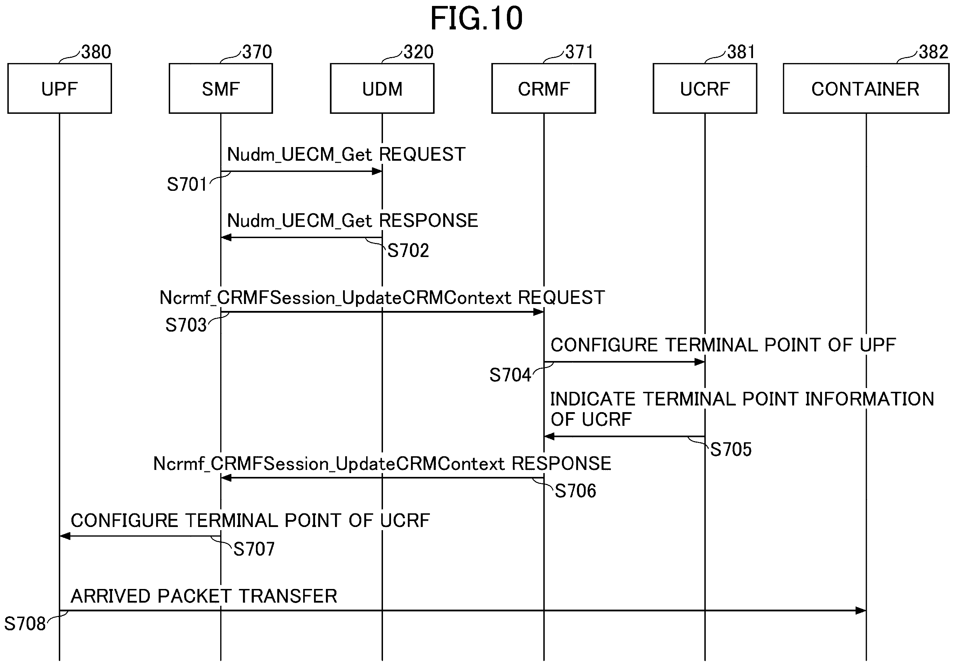

Fig. 10 is a sequence diagram illustrating an example of a flow of an arrived packet transfer procedure related to an embodiment of the present invention. The arrived packet transfer procedure is a procedure of transferring the arrived packet in a case where the SMF 370 determines that the arrived packet is to be transferred to the container 382 in the arrived packet transfer determination procedure illustrated in Fig. 9.

The SMF 370 transmits a "Nudm_UECM_Get" request to the UDM 320 (step S701). In the "Nudm_UECM_Get" request, the NF type is configured to be the CRMF 371 and the SUPI is configured to be the SUPI of the called terminal 20B.

The UDM 320 transmits a "Nudm_UECM_Get" response to the SMF 370 (step S702). The "Nudm_UECM_Get" response includes a CRMF-NF instance ID and a CRMF session ID.

Next, the SMF 370 transmits a "Ncrmf_CRMFSession_UpdateCRMContext" request to the CRMF 371 (step S703). The "Ncrmf_CRMFSession_UpdateCRMContext" request includes the CRMF session ID and terminal point information of the UPF 380. It is to be noted that the SMF 370 is an example of the third network node that transmits an indication that the packet to be transferred to the container 382 is stored by the UPF 380 to the CRMF 371.

The CRMF 371 configures the terminal point of the UPF 380 to the UCRF 381 (and the container 382) corresponding to the CRMF session ID (step S704). The terminal point of the UPF 380 is a terminal point for receiving a packet transmitted from the UCRF 381 (and the container 382). It is to be noted that the CRMF 371 is an example of the second network node that indicates configuration information for transferring a packet to the UCRF 381 (and the container 382). The UCRF 381 transmits the terminal point information of the UCRF 381 (and the container 382) for receiving a packet transmitted from the UPF 380 to the CRMF 371 (step S705).

The CRMF 371 transmits a "Ncrmf_CRMFSession UpdateCRMContext" response to the SMF 370 (step S706). The SMF 370 configures the terminal point of the UCRF 381 (and the container 382) to the UPF 380 (step S707). The terminal point of the UCRF 381 (and the container 382) is a terminal point for receiving a packet transmitted from the UPF 380.

In addition, the UPF 380 transfers the arrived packet to the container 382 (step S708). The arrived packet is a packet that is transmitted from the calling terminal 20A, and is received and buffered by the UPF 380 in step S601 in the arrived packet transfer determination procedure illustrated in Fig. 9.

The core network 30 can transfer the arrived packet to the container 382 according to the arrived packet transfer determination procedure illustrated in Fig. 9 and the arrived packet transfer procedure illustrated in Fig. 10.

### (Inter-container communication)

Next, an example will be described in which a container discovers another container and performs communications with the discovered container. For example, the container is assumed to search for another container by executing the application program including Al, or the like, and is assumed to autonomously perform communications with the discovered another container.

Hereinafter, the container is deemed as a UF (User Function) that resembles the NF (Network Function). A new service "Nnrf_UFManagement" that resembles the existing service "Nnrf_NFManagement" and a new service "Nnrf_UFDiscovery" that resembles the existing service "Nnrf_NFDiscovery" are defined for the NRF 340 as a premise of the following description. In addition, "UFProfile" is defined as a new information element that resembles the existing information element "NFProfile".

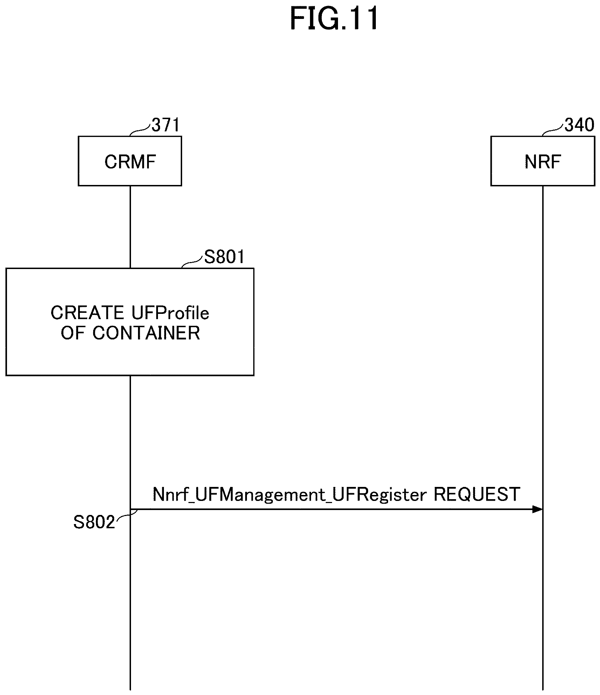

Fig. 11 is a sequence diagram illustrating an example of a flow of a container registration procedure related to an embodiment of the present invention. It is to be noted that the container 382 (or the CRMF 371) obtains an IP address for the internal communication of the container 382 and an IP address for the external communication of the container 382 at the time of generation of the container 382 as a premise of the following description.

The CRMF 371 creates "UFProfile" of the container 382 (step S801). The "UFProfile" includes a UF instance ID, an SUPI, an IP address for the internal communication, an IP address for the external communication, a CRMF-NF instance ID, etc.

The CRMF 371 transmits a "Nnrf_UFManagement_UFRegister" request to the NRF 340 (step S802). The NRF 340 is an example of a network management node that controls the network in order to discover an NF instance that provides services.

It is to be noted that the container 382 may create the "UFProfile" of the container 382 itself. In this case, the container 382 creates "UFProfile" of the container 382 itself and transmits a "Nnrf_UFManagement_UFRegister" request to the NRF 340.

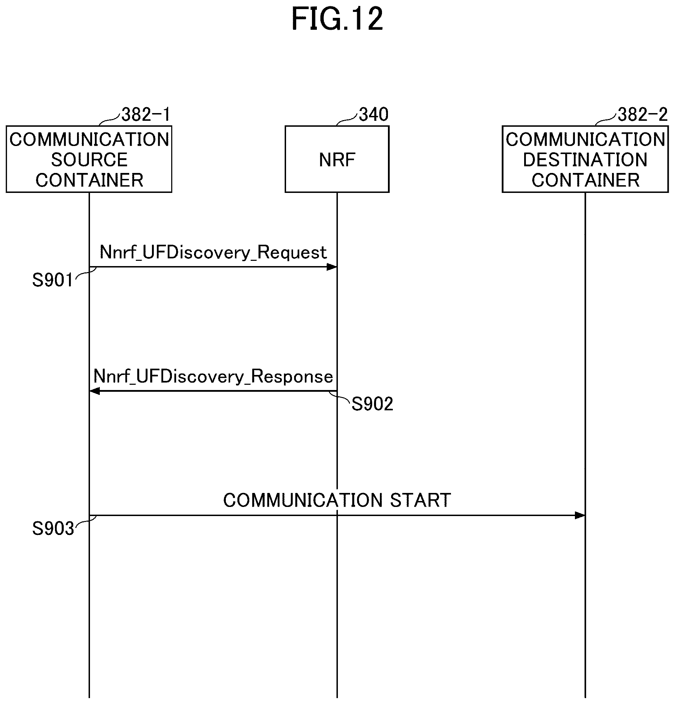

Fig. 12 is a sequence diagram illustrating an example of a flow of an inter-container communication procedure related to an embodiment of the present invention. The communication-source container 382-1 transmits "Nnrf_UFDiscovery_Request" to the NRF 340 (step S901). With respect to the "Nnrf_UFDiscovery_Request", the destination SUPI, or the like, is configured as a search key.

The NRF 340 transmits "Nnrf UFDiscovery_Response" to the communication-source container 382-1 (step S902). The "Nnrf UFDiscovery_Response" includes "UFProfile" of the communication-destination container 382-2.

Subsequently, the communication-source container 382-1 starts communications with the communication-destination container 382-2 (step S903).

According to the container registration procedure and the inter-container communication procedure, the communication-source container can discover the communication-destination container and perform communications with the communication-destination container.

### (Container move)

Next, an example will be described in which the container is moved in accordance with the subscriber move.

With respect to the container move, the core network 30 (CRMF 371) may perform an operation of one of the following three operation modes.

In the container move mode 1, the CRMF 371 does not move the container. The container move mode 1 is assumed to be used in a case of adopting the network form in which UCRFs are arranged in an aggregated manner.

In the container move mode 2, the CRMF 371 newly configures a container after stopping and removing the container that is currently used.

In the container move mode 3, the CRMF 371 newly configures a container to the move-destination while keeping the container that is currently used running. Furthermore, the CRMF 371 stops and removes the container that is currently used after the context is moved by the application in the container.

The container move mode 2 and the container move mode 3 are assumed to be used in a case of adopting the network form in which UCRFs are arranged in a distributed manner.

It is to be noted that, with respect to the necessity of the container move and the selection of the container move mode, the CRMF 371 may follow the determination of the PCF 360 or may perform determination of the CRMF 371 itself. The PCF 360 or the CRMF 371 may receive the terminal location (for example, information obtained from the AMF terminal location disclosure service), the subscriber's preferences related to the container move (for example, information indicated by the terminal at the time of generation of the target container, subscriber information), etc., and may determine the necessity of the container move or the selection of the container move mode based on the received information.

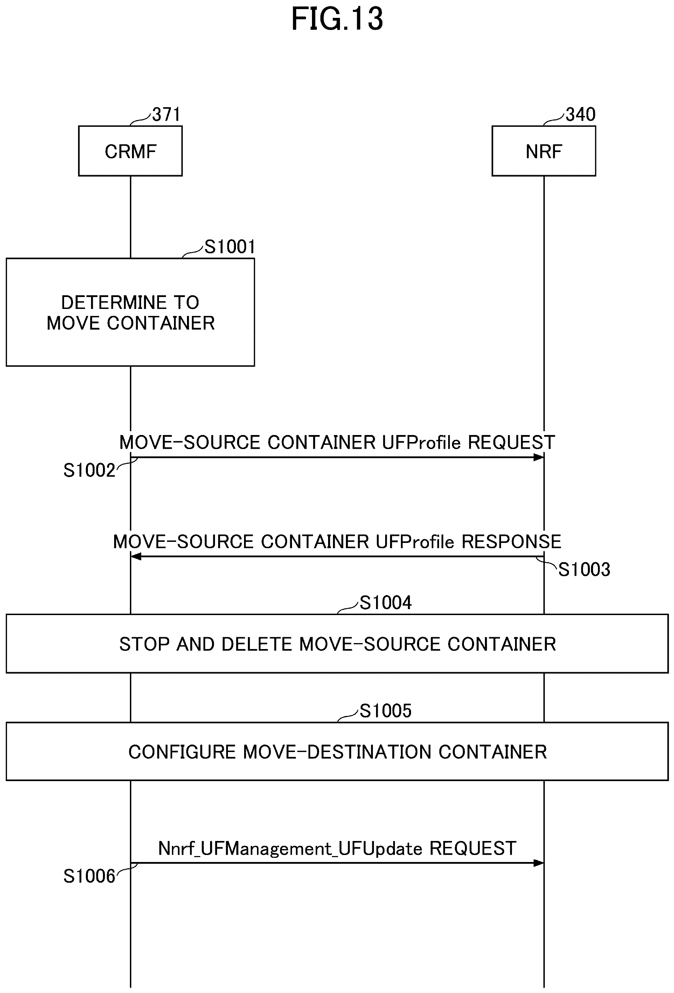

Fig. 13 is a sequence diagram illustrating an example of a flow of a container move procedure related to the container move mode 2 of an embodiment of the present invention.

The CRMF 371 determines to move the container (step S1001). Next, the CRMF 371 requests the "UFProfile" of the move-source container from the NRF 340 (step S1002). The NRF 340 responds to the CRMF 371 with the "UFProfile" of the move-source container (step S1003).

Next, the CRMF 371 stops and removes the move-source container (step S1004). Subsequently, the CRMF 371 configures a move-destination container (step S1005). The specific procedure of the above-described procedure may be similar to step S108 to step S110 in the CRMF session establishment procedure illustrated in Fig. 3.

It is to be noted that the move-destination container may be a container that has "UFProfile" equivalent to that of the move-source container. Here, the CRMF 371 may allocate a CRMF session ID that is the same as the move-source container to the move-destination container and may add the CRMF session ID child number. The move-destination container obtains an IP address for the internal communication and an IP address for the external communication.

The CRMF 371 transmits a "Nnrf_UFManagement_UFUpdate" request to the NRF 340 (step S1006). The NRF 340 registers the corresponding "UFProfile" to the move-destination container, the "UFProfile" being overwritten by the "UFProfile" of the move-source container.

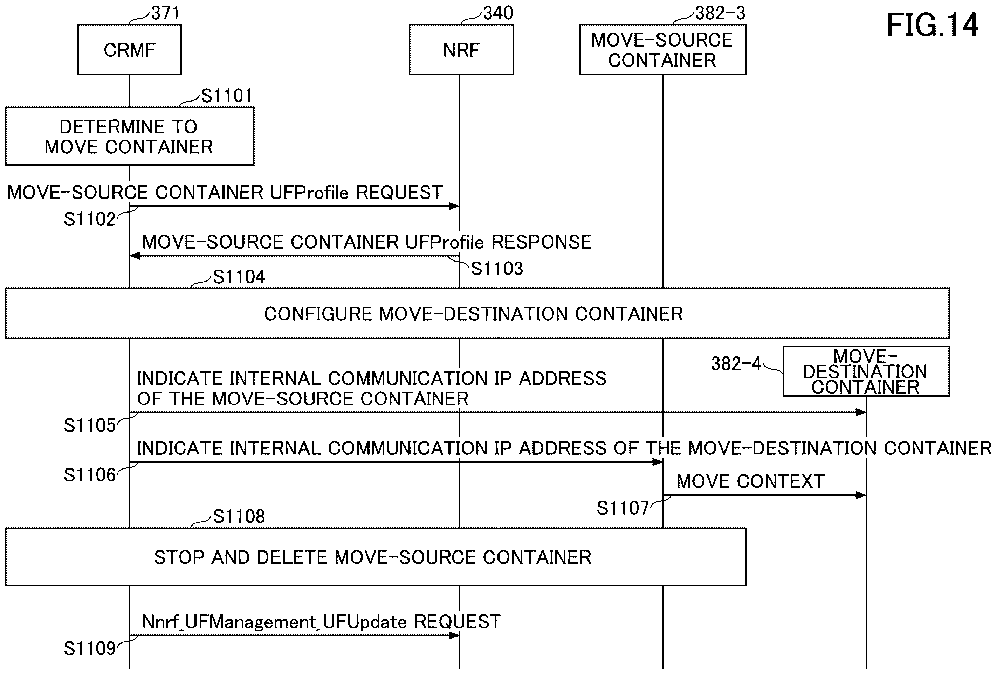

Fig. 14 is a sequence diagram illustrating an example of a flow of a container move procedure related to the container move mode 3 of an embodiment of the present invention.

The CRMF 371 determines to move the container (step S1101). Next, the CRMF 371 requests the NRF 340 for the "UFProfile" of the move-source container 382-3 (step S1102). The NRF 340 responds to the CRMF 371 with the "UFProfile" of the move-source container 382-3 (step S1103).

Subsequently, the CRMF 371 configures a move-destination container 382-4 (step S1104). The specific procedure may be similar to step S108 to step S110 in the CRMF session establishment procedure illustrated in Fig. 3.

It is to be noted that the move-destination container 382-4 may be a container that has "UFProfile" equivalent to that of the move-source container 382-3. Here, the CRMF 371 may allocate a CRMF session ID that is the same as the move-source container 382-3 to the move-destination container 382-4 and may add the CRMF session ID child number. The CRMF session ID child number may be, for example, a serial number starting from 1. The move-destination container 382-4 obtains an IP address for the internal communication and an IP address for the external communication.

Next, the CRMF 371 indicates an IP address for the internal communication of the move-source container 382-3 to the move-destination container 382-4 (step S1105). Subsequently, the CRMF 371 indicates an IP address for the internal communication of the move-destination container 382-4 to the move-source container 382-3 (step S1106).

The move-source container 382-3 moves the context to the move-destination container 382-4 (step S1107). The context may include, for example, various types of data, application program, configuration information, and the like.

Next, the CRMF 371 stops and removes the move-source container 382-3 by using the timer expiration as a trigger (step S1108). Furthermore, the CRMF 371 transmits a "Nnrf_UFManagement_UFUpdate" request to the NRF 340 (step S1109). The NRF 340 registers the corresponding "UFProfile" to the move-destination container 382-4, the "UFProfile" being overwritten by the "UFProfile" of the move-source container 382-3.

According to the container move procedure illustrated in Fig. 13 or Fig. 14, the core network 30 can move the container in accordance with the subscriber move, or the like.

### (Device configuration)

Next, a functional configuration example of the base station 10, the terminal 20, and various types of network nodes that perform processes and operations described above will be described. The base station 10, the terminal 20, and various types of network nodes include functions for implementing the embodiments described above. It is to be noted, however, that each of the base station 10, the terminal 20, and various types of network nodes may include only some of the functions in the embodiments.

### <Base station 10 and network node>

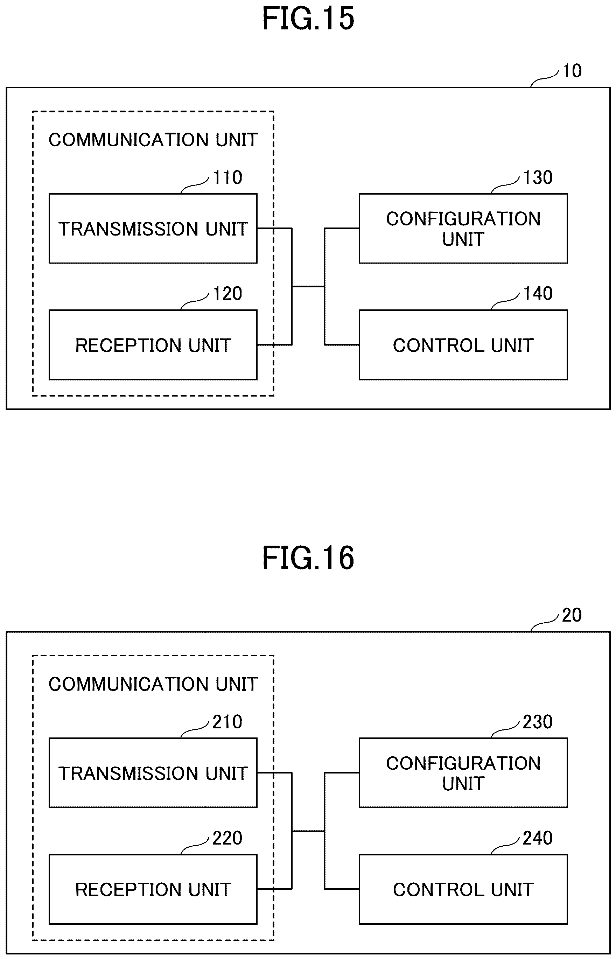

Fig. 15 is a diagram illustrating an example of a functional configuration of the base station 10. As shown in Fig. 15, the base station 10 includes a transmission unit 110, a reception unit 120, a configuration unit 130, and a control unit 140. The functional configuration illustrated in Fig. 15 is merely an example. Functional divisions and names of functional units may be anything as long as operations according to an embodiment of the present invention can be performed. It is to be noted that network nodes may have a similar functional configuration as the base station 10. In addition, the network nodes having a plurality of different functions in the system architecture may be composed of a plurality of network nodes separated for each function.

The transmission unit 110 includes a function for generating a signal to be transmitted to the terminal 20 or to another network node and transmitting the signal in a wired manner or wireless manner. The reception unit 120 includes a function for receiving various types of signals transmitted from the terminal 20 or another network node, and obtaining, for example, information of an upper layer from the received signals.

The configuration unit 130 stores preset configuration information and various configuration information items to be transmitted to the terminal 20 in a storage apparatus and reads the preset configuration information from the storage apparatus as necessary. Contents of the configuration information are, for example, configurations related to communications using the NTN.

The control unit 140 performs processing related to communications using the NTN as described in the embodiments. Further, the control unit 140 performs a process related to communications with the terminal 20. Further, the control unit 140 performs a process related to geographical location verification of the terminal 20. The functional units related to signal transmission in the control unit 140 may be included in the transmission unit 110, and the functional units related to signal reception in the control unit 140 may be included in the reception unit 120.

### <Terminal 20>

Fig. 16 is a diagram illustrating an example of a functional configuration of the terminal 20. As shown in Fig. 16, the terminal 20 includes a transmission unit 210, a reception unit 220, a configuration unit 230, and a control unit 240. The functional configuration illustrated in Fig. 16 is merely an example. Functional divisions and names of functional units may be anything as long as operations according to an embodiment of the present invention can be performed. Similar to the terminal 20, the USIM that is attached to the terminal 20 may include a transmission unit 210, a reception unit 220, a configuration unit 230, and a control unit 240.

The transmission unit 210 generates a transmission signal from transmission data and transmits the transmission signal wirelessly. The reception unit 220 receives various signals wirelessly and obtains upper layer signals from the received physical layer signals. Furthermore, the reception unit 220 has a function of receiving NR-PSS, NR-SSS, NR-PBCH, DL/UL control signals, or reference signals transmitted from the network node.

The configuration unit 230 stores various types of configuration information received from the network node via the reception unit 220 in the storage device and reads the configuration information from the storage device depending on the necessity. In addition, the configuration unit 230 also stores pre-configured configuration information.

The network node in an embodiment of the present invention may be configured to be a network node as described in each item below. In addition, a communication method below may be performed.

### <Configuration related to an embodiment of the present invention>

(First item)
   A network node including:
   a reception unit configured to receive information indicating properties of a computing resource that is configured to a subscriber and a location of a terminal of the subscriber; and
   a control unit configured to control the computing resource to move to another network node, based on the information indicating the properties of the computing resource and the location of the terminal of the subscriber.
(Second item) The network node as described in the first item, wherein
   the control unit configures a move-destination computing resource after performing stopping or deleting of a move-source computing resource.
(Third item) The network node as described in the first item, wherein
   the control unit configures a move-destination computing resource and controls a context of a move-source computing resource to move to the move-destination computing resource.
(Fourth item) A communication method performed by a network node, the communication method including:
   receiving information indicating properties of a computing resource that is configured to a subscriber and a location of a terminal of the subscriber; and
   controlling the computing resource to move to another network node, based on the information indicating the properties of the computing resource and the location of the terminal of the subscriber.

According to any one of the above-described configurations, a technique is provided that enables the computing resource in the network to move in accordance with the move of the subscriber. According to the second item, the move-destination computing resource can be configured after stopping or deleting of the move-source computing resource is performed. According to the third item, the context of the move-source computing resource can be moved to the move-destination computing resource.

### (Hardware structure)

In the above block diagrams used for describing an embodiment of the present invention (Fig. 15 and Fig. 16), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

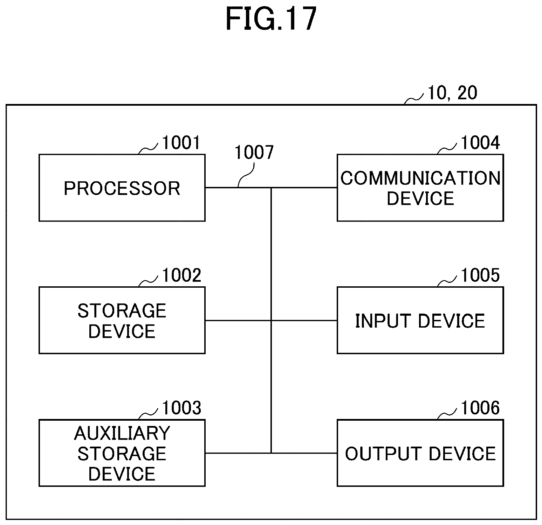

For example, the network node, the terminal 20, etc., according to an embodiment of the present disclosure may function as a computer for processing the wireless communication method of the present disclosure. Fig. 17 is a drawing illustrating an example of hardware structures of the base station 10 and the terminal 20 according to an embodiment of the present invention. The network node may have a hardware configuration that is similar to that of the base station 10. The USIM may have a hardware configuration that is similar to the terminal 20. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and the terminal 20 may include one or more of each of the devices illustrated in the figure, or may not include some devices.

Each function in the base station 10 and the terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 15 may be realized by control programs that are stored in the storage device 1002 and are executed by the processor 1001. Further, for example, the control unit 240 of the terminal 20 illustrated in Fig. 16 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disc, digital versatile disc, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission or reception device) for communicating with computers via at least one of a wired network or a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) or a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

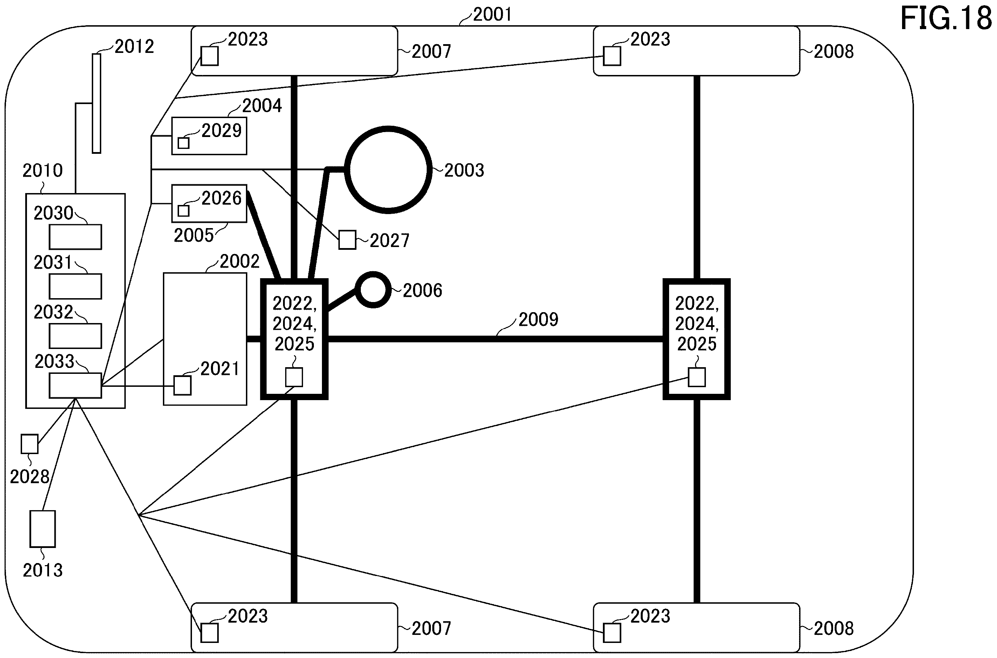

Fig. 18 shows an example of a configuration of a vehicle 2001. As shown in Fig. 18, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing a driver's operating burden such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an Al processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits a current signal, which is input to the electronic control unit 2010 from the current sensor, to the external devices through radio communication. In addition, the communication module 2013 also transmits, to the external devices through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, that are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information indication may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), 6th generation mobile communication system (6G), xth generation mobile communication system (xG) (xG (x is, for example, an integer or a decimal)), FRA (Future Radio Access), NR (new Radio), New radio access (NX), Future generation radio access (FX), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced, modified, developed, or defined therefrom. Further, multiple systems may also be applied in combination (e.g., at least one of LTE or LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, and each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station or the mobile station may be referred to as a transmission apparatus, reception apparatus, communication apparatus, or the like. The at least one of the base station or the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station or the mobile station may include an apparatus that does not necessarily move during communication operations. For example, at least one of the base station or the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The terms "determination" and "decision" may include "determination" and "decision" made with judging, calculating, computing, processing, deriving, investigating, searching (looking up, search, inquiry) (e.g., search in a table, a database, or another data structure), or ascertaining. Further, the "determining" may include "determining" made with receiving (e.g., receiving information), transmitting (e.g., transmitting information), inputting, outputting, or accessing (e.g., accessing data in a memory). Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission or reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, or specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station (RAN)
110 Transmission unit
120 Reception unit
130 Configuration unit
140 Control unit
20 Terminal
30 Core network
40 DN
210 Transmission unit
220 Reception unit
230 Configuration unit
240 Control unit
310 AMF
320 UDM
330 NEF
340 NRF
350 AUSF
360 PCF
370 SMF
371 CRMF
380 UPF
381 UCRF
382 Container
390 AF
1001 Processor
1002 Storage device
1003 Auxiliary storage device
1004 Communication device
1005 Input device
1006 Output device
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A network node comprising:
a reception unit configured to receive information indicating properties of a computing resource that is configured to a subscriber and a location of a terminal of the subscriber; and
a control unit configured to control the computing resource to move to another network node, based on the information indicating the properties of the computing resource and the location of the terminal of the subscriber.

2. The network node as claimed in claim 1, wherein
the control unit configures a move-destination computing resource after performing stopping or deleting of a move-source computing resource.

3. The network node as claimed in claim 1, wherein
the control unit configures a move-destination computing resource and controls a context of a move-source computing resource to move to the move-destination computing resource.

4. A communication method performed by a network node, the communication method comprising:
receiving information indicating properties of a computing resource that is configured to a subscriber and a location of a terminal of the subscriber; and
controlling the computing resource to move to another network node, based on the information indicating the properties of the computing resource and the location of the terminal of the subscriber.
